# EUROPEAN PATENT APPLICATION

(11) **EP 4 524 894 A1**
(43) Date of publication of application: **19.03.2025**
(21) Application number: 23888029.8
(22) Date of filing: 08.11.2023
(51) Int. Cl.: G06T 13/40

(54) **INTERACTION METHOD, APPARATUS AND DEVICE BASED ON AVATARS, AND STORAGE MEDIUM**

(30) Priority: 09.11.2022 CN 202211400141
(71) Applicant: Beijing Zitiao Network Technology Co., Ltd., Beijing 100190 (CN)
(72) Inventor: HE, Zhimiao, Beijing 100028 (CN); WAN, Shiqi, Beijing 100028 (CN); CHANG, Weiyi, Beijing 100028 (CN); SUN, Yuze, Beijing 100028 (CN)
(74) Representative: Williams, Michael David
(86) International application number: PCT/CN2023/130376
(87) International publication number: WO 2024/099340

(57) **Abstract**

Provided in the present disclosure are an interaction method, apparatus and device based on avatars, and a storage medium. The method comprises: in response to a trigger operation for a preset interaction entrance in a target page, displaying an avatar generation page; on the basis of an avatar creation operation acting on the avatar generation page, generating a first avatar; and, in response to a preset interaction trigger operation for the first avatar, sending to a first user the first avatar.

## Description

The present application claims priority to Chinese Patent Application No. 202211400141.3 filed on Nov. 09, 2022, the disclosure of which is incorporated by reference herein in its entirety.

### TECHNICAL FIELD

The present disclosure relates to the field of data processing, and in particular a virtual character-based interaction method, apparatus, and device, and a storage medium.

### BACKGROUND

Virtual characters refer to characters created in a physical display screen or virtual space by computer 2D technology drawing or 3D modeling technology building. In actual life, the virtual character can greatly improve the experience of human-computer interaction.

With the continuous development of interaction technologies of the virtual character, the virtual character-based interactive functions are becoming more and more popular in various types of application software.

### SUMMARY

In order to solve the above-mentioned technical problem, the present disclosure provides a virtual character-based interaction method, apparatus, and device, and a storage medium, which can enrich the virtual character-based interactive functions and then improve the interactive experience of users for the virtual object.

According to a first aspect, the present disclosure provides a virtual character-based interaction method, which comprises, on a second user side:
displaying a character generation page in response to a trigger operation for a preset interaction entry in a target page; wherein, the target page is an associated page of a first user;
generating a first virtual character based on a virtual character creation operation acting on the character generation page;
triggering sending of the first virtual character to the first user in response to a preset interaction trigger operation for the first virtual character; wherein, the first virtual character is used for generating a target virtual character associated with the first user.

In one optional implementation, the displaying the character generation page in response to the trigger operation for the preset interaction entry in a target page of a virtual character comprises:
jumping from the chat page to the character generation page and displaying the character generation page in response to a trigger operation for a preset interaction entry of a virtual character on a chat page; wherein the chat page is used for displaying a chat with participation of the first user and the second user.

In one optional implementation, the triggering sending of the first virtual character to the first user in response to a preset interaction trigger operation for the first virtual character comprises:
presenting the first virtual character on the chat page based on a first message card in response to a preset interaction trigger operation for the first virtual character.

In one optional implementation, after the triggering sending of the first virtual character to the first user in response to the preset interaction trigger operation for the first virtual character, the method further comprises:
jumping from the chat page to the character generation page and displaying the first virtual character on the character generation page in response to a trigger operation for the first virtual character on the chat page;
receiving an adjustment operation for the first virtual character on the character generation page to generate an updated virtual character.

In one optional implementation, after the receiving the adjustment operation for the first virtual character on the character generation page to generate the updated virtual character, the method further comprises:
triggering sending of the updated virtual character to the first user in response to a preset interaction trigger operation for the updated virtual character; wherein, the updated virtual character is used for generating a target virtual character associated with the first user.

In one optional implementation, the triggering sending of the updated virtual character to the first user in response to a preset interaction trigger operation for the updated virtual character comprises:
presenting the updated virtual character on the chat page based on a second message card in response to a preset interaction trigger operation for the updated virtual character.

In one optional implementation, before the jumping from the chat page to the character generation page and displaying the character generation page in response to the trigger operation for the preset interaction entry on the chat page, the method further comprises:
displaying a preset interaction entry for a virtual character on the chat page in response to an application trigger operation for a preset type of emoji animation on the chat page; wherein, the preset type of emoji animation is a virtual character-based interactive emoji animation.

In one optional implementation, after the displaying the preset interaction entry for the virtual character on the chat page in response to the application trigger operation for the preset type of emoji animation on the chat page, the method further comprises:
after determining that the target virtual character associated with the first user is generated, conducting a chat on the chat page based on the preset type of emoji animation; wherein, the preset type of emoji animation comprises the target virtual character and a virtual character corresponding to the second user.

According to a second aspect, the present disclosure provides a virtual character-based interaction method, which comprises, on a first user side:
receiving a first virtual character;
generating a target virtual character associated with the first user based on the first virtual character in response to an application trigger operation for the first virtual character; wherein, the target virtual character is used for generating a target media resource associated with the first user.

In one optional implementation, the receiving the first virtual character comprises:
receiving the first virtual character on a chat page based on a first message card.

In one optional implementation, before the generating the target media resource based on the first virtual character in response to the application trigger operation for the first virtual character, the method further comprises:
generating a target virtual character associated with the first user based on the first virtual character in response to a trigger operation for the first message card on the chat page.

In one optional implementation, after the generating the target virtual character associated with the first user based on the first virtual character in response to the application trigger operation for the first virtual character, the method further comprises:
generating an emoji animation associated with the first user based on the target virtual character in response to an application trigger operation for the target virtual character; wherein, the emoji animation associated with the first user is applied to conduct a chat on the chat page.

In one optional implementation, after the receiving the first virtual character, the method further comprises:
displaying the first virtual character on the character generation page in response to an update trigger operation for the first virtual character;
receiving an adjustment operation for the first virtual character on the character generation page to generate an updated first virtual character; wherein, the updated first virtual character is used for generating a target virtual character associated with the first user.

In one optional implementation, the target media resource comprises at least one of: an emoji pack, a user profile picture, and a media content corresponding to the target virtual character.

According to a third aspect, the present disclosure provides a virtual character-based interaction apparatus, which comprises:
a first display module for displaying a character generation page in response to a trigger operation for a preset interaction entry in a target page; wherein, the target page is an associated page of a first user;
a first generation module for generating a first virtual character based on a virtual character creation operation acting on the character generation page;
a sending module for triggering sending of the first virtual character to the first user in response to a preset interaction trigger operation for the first virtual character; wherein, the first virtual character is used for generating a target virtual character associated with the first user.

According to a fourth aspect, the present disclosure provides a virtual character-based interaction apparatus, which comprises:
a reception module for receiving a first virtual character;
a second generation module for generating a target virtual character associated with the first user based on the first virtual character in response to an application trigger operation for the first virtual character; wherein, the target virtual character is used for generating a target media resource associated with the first user.

According to a fifth aspect, the present disclosure provides a computer readable storage medium storing therein instructions which, when operated on a terminal device, cause the terminal device to implement the above-mentioned method.

According to a sixth aspect, the present disclosure provides a virtual character-based interaction device, comprising: a memory, a processor, and a computer program which is stored on the memory and operational on the processor, wherein the processor, when executing the computer program, implements the above-mentioned method.

According to a seventh aspect, the present disclosure provides a computer program product comprising computer programs/instructions which, when executed by a processor, implement the above-mentioned method.

### BRIEF DESCRIPTION OF THE DRAWINGS

The accompanying drawings, which are incorporated into and constitute a part of the present specification, illustrate embodiments consistent with the present disclosure and together with the specification, serve to explain the principles of the present disclosure.

In order to explain the technical solutions in the embodiments of the present disclosure or in the related art more clearly, the drawings needed in the description of the embodiments or the related art will be briefly introduced below. Obviously, for those skilled in the art, other drawings can be obtained according to these drawings without inventive effort.
Fig. 1 is a flow diagram of a virtual character-based interaction method provided by an embodiment of the present disclosure;
Fig. 2 is a schematic diagram of a chat page provided by an embodiment of the present disclosure;
Fig. 3 is a schematic diagram of a character generation page provided by an embodiment of the present disclosure;
Fig. 4 is a schematic diagram of another chat page provided by an embodiment of the present disclosure;
Fig. 5 is a schematic diagram of yet another chat page provided by an embodiment of the present disclosure;
Fig. 6 is a schematic diagram of a character sending page provided by an embodiment of the present disclosure;
Fig. 7 is a schematic diagram of yet another chat page provided by an embodiment of the present disclosure;
Fig. 8 is a schematic diagram of yet another chat page provided by an embodiment of the present disclosure;
Fig. 9 is a flow diagram of another virtual character-based interaction method provided by an embodiment of the present disclosure;
Fig. 10 is a schematic diagram of yet another chat page provided by an embodiment of the present disclosure;
Fig. 11 is a schematic diagram of a preset interactive function page provided by an embodiment of the present disclosure;
Fig. 12 is a schematic structural diagram of a virtual character-based interaction apparatus provided by an embodiment of the present disclosure;
Fig. 13 is a schematic structural diagram of a virtual character-based interaction device provided by an embodiment of the present disclosure.

### DETAILED DESCRIPTION OF EMBODIMENTS

In order to more clearly understand the above objectives, features, and advantages of the present disclosure, the solutions of the present disclosure are described further below. It should be noted that, in case if there is no conflict, embodiments of the present disclosure and features in the embodiments can be combined with each other.

It can be understood that before the technical solutions disclosed in various embodiments of the present disclosure are used, users should be informed of the types, scope of use, use scenarios, etc. of personal information involved in the present disclosure in an appropriate way according to relevant laws and regulations, and the authorization of users should be obtained.

For example, in response to receiving an active request of a user, prompt information is sent to the user to clearly remind the user that the operation requested by the user will require obtaining and using the user's personal information. Therefore, the user can independently select whether to provide personal information to software or hardware such as electronic devices, applications, servers or storage media that perform the operations of the technical solutions of the present disclosure according to the prompt information.

As an optional but non-limiting implementation, in response to receiving the user's active request, the way to send the prompt information to the user can be, for example, by a pop-up window, in which the prompt information can be presented in text. In addition, the pop-up window can also carry a selection control for the user to select "agree" or "disagree" to provide personal information to the electronic device.

It can be understood that the above process of notifying and obtaining user authorization is only exemplary, and does not limit the implementation of the present disclosure. Other ways to meet relevant laws and regulations can also be applied to the implementation of the present disclosure.

In the following description, many specific details are set forth in order to fully understand the present disclosure, but the present disclosure can also be implemented in ways other than those described herein. Obviously, the embodiments in the specification are only part of the embodiments of the present disclosure, not all of them.

Virtual characters refer to characters created in a physical display screen or virtual space by computer 2D technology drawing or 3D modeling technology construction. In actual life, the virtual character can greatly improve the experience of human-computer interaction.

A virtual character-based interaction mode can include functions such as creating and generating virtual characters by users, such as setting a face shape, clothing, and the like for a virtual character by using a preset character model, and also can include controlling a virtual character to walk, perform actions or change emojis by users through fingers or devices.

With the continuous development of interaction technologies of the virtual character, the functions of performing interaction based on the virtual character are becoming more and more popular in various types of application software. Therefore, how to enrich the virtual character-based interactive functions so as to improve the interactive experience of users for the virtual character, is an urgent technical problem to be solved at present.

Therefore, an embodiment of the present disclosure provides a virtual character-based interaction method, comprising: firstly, displaying a character generation page in response to a trigger operation for a preset interaction entry in a target page; generating a first virtual character based on a virtual character creation operation acting on the character generation page; then, sending the first virtual character to the first user in response to a preset interaction trigger operation for the first virtual character. It can be seen that the embodiment of the present disclosure can realize the interactive functions of creating the first virtual character and sending it to the first user, which enriches the virtual character-based interactive functions and further improves the interactive experience of users for the virtual character.

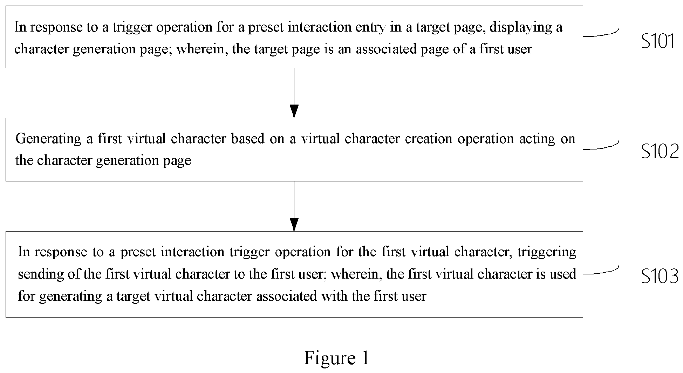

Based on this, an embodiment of the present disclosure provides a virtual character-based interaction method. With reference to Fig. 1, it is a flow diagram of a virtual character-based interaction method provided by an embodiment of the present disclosure. The method includes, at a second user side:
S101: displaying a character generation page in response to a trigger operation for a preset interaction entry in a target page.

The virtual character-based interaction method provided by the embodiment of the present disclosure can be applied to clients, for example, clients can include a client deployed on a smart phone, a client deployed on a tablet computer, and the like.

In the embodiment of the present disclosure, virtual characters refer to characters created in a physical display screen or virtual space by computer 2D technology drawing or 3D modeling technology construction, which can include a virtual personal character, a virtual animal character, a virtual cartoon character, etc. Specifically, the virtual character can be a two-dimensional virtual character or a three-dimensional virtual character.

In the embodiment of the present disclosure, the first user can be a character receiver that performs interaction based on a virtual character, and the second user can be a character sender that performs interaction based on a virtual character, wherein the first user and the second user can be users of the same client or users of different clients.

In the embodiment of the present disclosure, the target page is an associated page of the first user. For example, the target page can be a chat page where the first user and the second user participate in a chat, or a personal homepage of the first user, or a friend list page to which the first user belongs or an activity page to which the first user belongs, or the like.

In the embodiment of the present disclosure, the preset interaction entry in the target page can be set at any position on the target page based on requirements. For example, the preset interaction entry in the target page can be set in a navigation bar position, a folding panel, etc. on the chat page of the first user and the second user, and can also be set at any position on the personal homepage of the first user, etc. The trigger operation for the preset interaction entry can include a click operation, a long press operation and the like, and the chat page is used for displaying a chat with the participation of the first user and the second user.

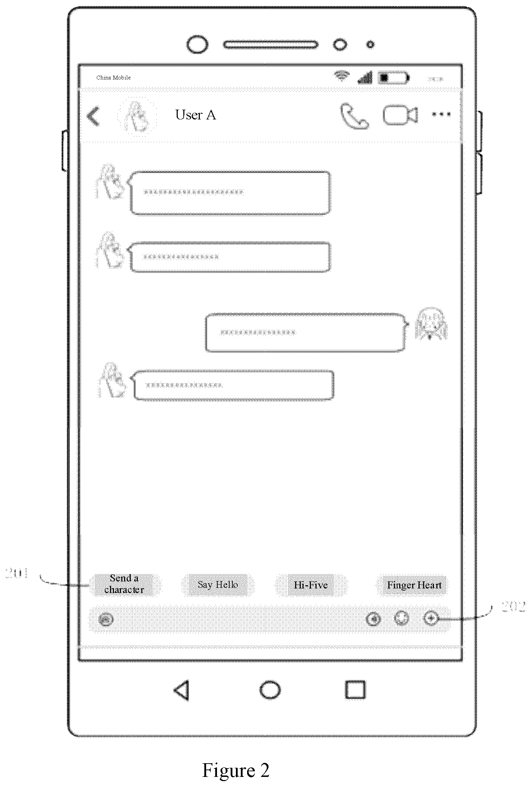

As shown in Fig. 2, it is a schematic diagram of a chat page provided by an embodiment of the present disclosure, in which a preset interaction entry 201 is displayed on a chat page of the second user and the first user, and when a click operation acting on the preset interaction entry 201 is received, it is jumped from the chat page shown in Fig. 2 to a character generation page.

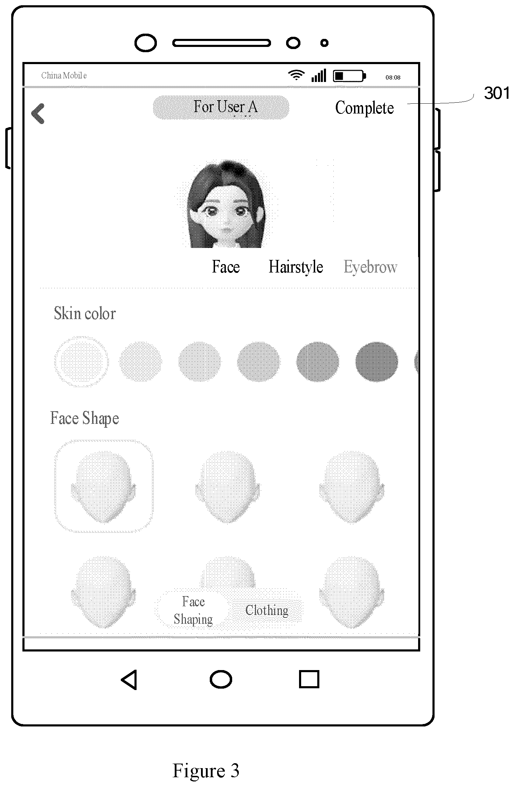

As shown in Fig. 3, it is a schematic diagram of a character generation page provided by an embodiment of the present disclosure. Optional virtual resources such as skin color, face shape, hairstyle and clothing are presented on the character generation page, which are used for creating virtual characters. In addition, after jumping from the chat page to the character generation page, it is possible to display prompt words of "for XX" on the character generation page, for example, "for User A" as shown in Fig. 3, which is used for prompting that the second user is creating a virtual character for user A, wherein user A can refer to the first user for receiving a virtual character on the chat page.

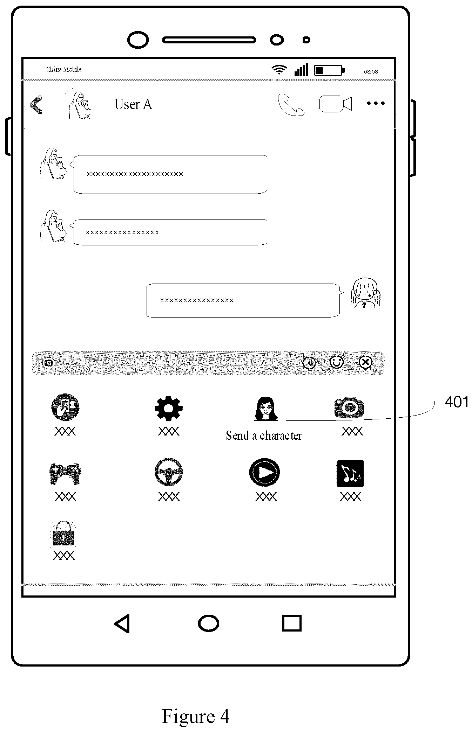

In one optional implementation, the preset interaction entry for the virtual character can also be set on a folding panel (also called a plus panel) of the chat page of the second user and the first user. As shown in Fig. 2, when a click operation acting on an expansion control 202 of the chat page is received, the folding panel of the chat page is expanded, and the preset interaction entry is presented in the form of an interaction control in the folding panel. As shown in Fig. 4, it is a schematic diagram of another chat page provided by an embodiment of the present disclosure, in which a preset interaction entry 401 is displayed on a folding panel, and when a click operation acting on an interaction control 401 on the folding panel is received, the chat page shown in Fig. 4 jumps to the character generation page shown in Fig. 3.

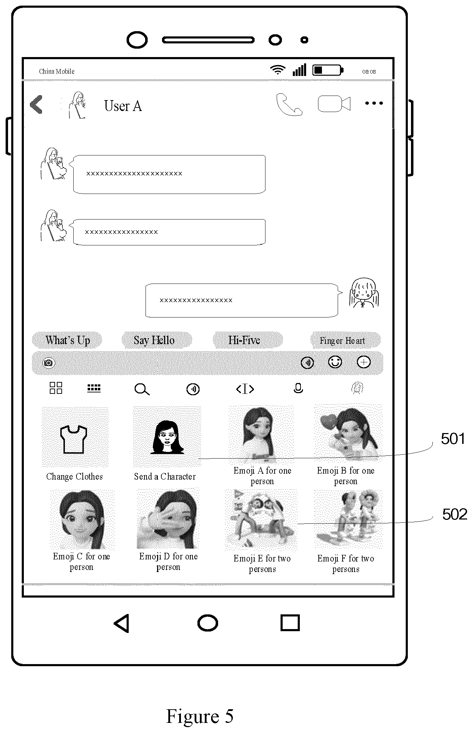

In another optional implementation, the preset interaction entry in the target page can also be set on a virtual character emoji panel of the chat page. Specifically, the preset interaction entry is presented in the form of an interaction control in the virtual character emoji panel. As shown in Fig. 5, it is a schematic diagram of yet another chat page provided by an embodiment of the present disclosure, wherein a preset interaction entry 501 is displayed on the virtual character emoji panel, and when a click operation acting on the interaction control 501 in the virtual character emoji panel is received, the chat page shown in Fig. 5 jumps to the character generation page shown in Fig. 3.

In an application scenario, in order to further enrich the virtual character-based interactive functions and improve the interactive experience of the second user for the virtual character, a preset interaction entry can also be set on the personal homepage of the first user. Specifically, when the second user enters the personal homepage of the first user and triggers the presentation of a profile picture information page of the first user, the preset interaction entry can be presented in the form of an interaction control on the profile picture information page of the first user, and by clicking the preset interaction entry, the virtual character-based interactive functions can be realized, for example, a virtual character is sent to the first user so that it can be applied as a user profile picture. Specifically, when receiving the click operation acting on the interaction control, it is possible to jump from the profile picture information page to the character generation page shown in Fig. 3, and then create the virtual character based on the character generation page.

In another application scenario, the preset interaction entry in the target page can also be set on a friend list page to which the first user belongs. Specifically, on the friend list page to which the first user belongs, a corresponding preset interaction entry is respectively set for each friend, which is used for triggering virtual character-based interaction for the friend. For example, when receiving a click operation acting on a preset interaction entry corresponding to the first user (user A), it is possible to jump from the friend list page to which the first user belongs to the character generation page, and create a virtual character based on the character generation page, so as to send the created virtual character to the first user (user A) later, which realizes the effect of performing interaction and communication with the friend by using the virtual characters.

Yet in another application scenario, the preset interaction entry can also be set on an activity page to which the first user belongs, such as a plaza activity page to which the first user belongs. Specifically, the preset interaction entry of the virtual character can be presented in the form of an interaction control on the activity page to which the first user belongs. Specifically, the first user is determined in a rolling way on a plaza page, and then the function of creating a virtual character for the first user can be triggered by clicking the preset interaction entry "character for Him/Her".

S102: generating a first virtual character based on a virtual character creation operation acting on the character generation page. In the embodiment of the present disclosure, at least one character model for generating a virtual character can be displayed on the character generation page. Specifically, the character model can include part models of various parts of the virtual character, and etc. For example, the part models of the virtual character can include a face model, wherein the face model can include finer-grained selection controls on face shape, skin color, and etc. Through a trigger operation for a selection control corresponding to a different skin color, the creation of the skin color of the virtual character is triggered. The character model of the virtual character is not limited by the embodiment of the present disclosure.

In the embodiment of the present disclosure, the virtual character creation operation acting on the character generation page can include any type of operation performed on the character generation page, such as operations of selecting hairstyle, face shape, skin, and etc., which is used for realizing the generation function of the first virtual character, wherein the virtual character creation operation can also include a click operation acting on a creation control of the character generation page and etc..

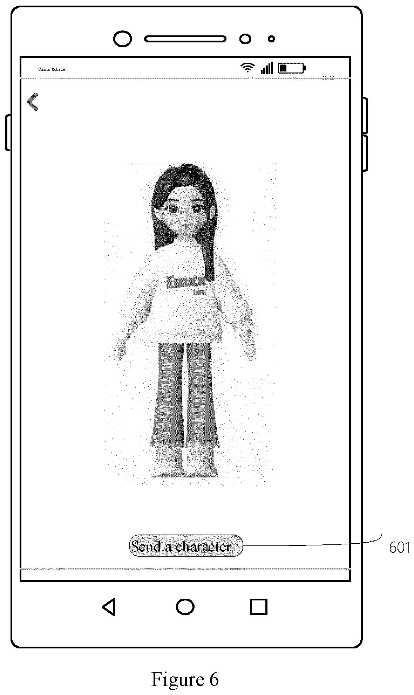

As shown in Fig. 3, after different parts of the virtual character are created on the character generation page, when a click operation acting on a creation control 301 in the character generation page is received, a first virtual character is generated and displayed on a character sending page. As shown in Fig. 6, it is a schematic diagram of a character sending page provided by an embodiment of the present disclosure.

S103: triggering sending of the first virtual character to the first user in response to a preset interaction trigger operation for the first virtual character; wherein, the first virtual character is used for generating a target virtual character associated with the first user.

In the embodiment of the present disclosure, the preset interaction trigger operation for the first virtual character can include a sending operation for the first virtual character, such as a click operation acting on a sending control 601 of the character sending page as shown in Fig. 6.

In one optional implementation, when receiving the preset interaction trigger operation for the first virtual character, it is possible to upload the first virtual character to a server, which then sends the first virtual character to the first user.

In another optional implementation, assuming that the second user has synchronized the first virtual character to the server in the process of creating the first virtual character, when receiving the preset interaction trigger operation for the first virtual character, it is possible to send a character upload request to the server so as to request the server to send the first virtual character to the first user.

In the embodiment of the present disclosure, the first user can be any predetermined user, for example, at least one chat user who participates in a chat on a chat page, or a friend user selected from a friend list, etc., which is not limited in the embodiment of the present disclosure.

In one optional implementation, it is also possible to determine the first user for receiving the first virtual character after completing the creation of the first virtual character on the character generation page. For example, in a one-to-many group chat scenario, in response to a preset interaction trigger operation for the first virtual character, user names in the group chat are presented in a list style on the chat page, and after a selection operation for any user in the list is received, the user is regarded as the first user for receiving the first virtual character.

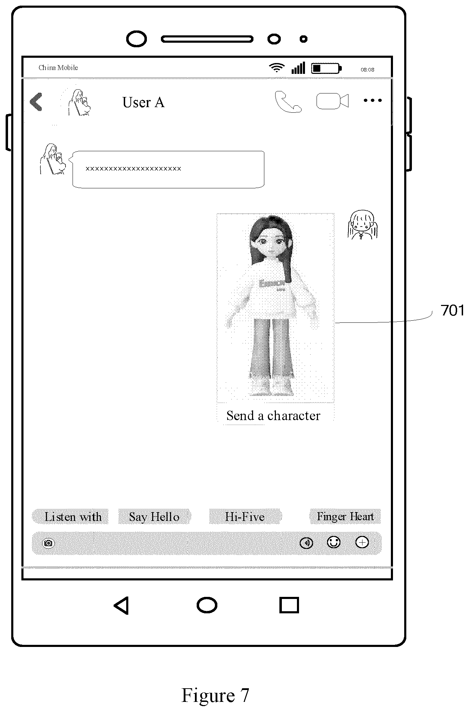

In the embodiment of the present disclosure, after a character generation page is entered based on a chat page in which a first user and a second user participate and a first virtual character is generated, if receiving a preset interaction trigger operation for the first virtual character, it is possible to present the first virtual character on the chat page based on a first message card. As shown in Fig. 7, it is a schematic diagram of yet another chat page provided by an embodiment of the present disclosure.

A first message card 701 on the chat page can include text information, presented pictures and the like corresponding to the first virtual character. For example, the text information corresponding to the first virtual character can be the words "Send a character", and the presented picture corresponding to the first virtual character can be the presented picture for the whole character or the head of the first virtual character. The target virtual character is sent to the first user based on the message card on the chat page shown in Fig. 7.

In the embodiment of the present disclosure, the first virtual character is used for generating the target virtual character associated with the first user, which means that after the first virtual character is sent to the first user, if the first user receives the first virtual character, it is possible to use the first virtual digital virtual character as the target virtual character associated with the first user, and then generate a target media resource based on the target virtual character.

In the embodiment of the present disclosure, the target virtual character is specifically used for generating the target media resource for the first user, in other words, the target media resource is generated based on the target virtual character, wherein the target media resource can include at least one of an emoji pack, a user profile picture, and a media resource corresponding to the target virtual character.

The virtual character-based interaction method provided by the embodiment of the present disclosure comprises: firstly, displaying a character generation page in response to a trigger operation for a preset interaction entry in a target page; generating a first virtual character based on a virtual character creation operation acting on the character generation page; then, triggering sending of the first virtual character to the first user in response to a preset interaction trigger operation for the first virtual character. It can be seen that the embodiment of the present disclosure can realize the interactive functions of creating the first virtual character and sending it to the first user, which enriches the virtual character-based interactive functions and improves the interactive experience of users for the virtual character.

In practical application, in order to further enrich the virtual character-based interactive functions, the embodiment of the present disclosure can also trigger the displaying of the preset interaction entry for the virtual character when receiving an application trigger operation for a preset type of emoji animation on the chat page.

Specifically, in response to an application trigger operation for a preset type of emoji animation on the chat page, a preset interaction entry for a virtual character is displayed on the chat page, and then in response to a trigger operation for the preset interaction entry for the virtual character, the chat page jumps to a character generation page, and the virtual character is created based on the character generation page.

In the embodiment of the present disclosure, the preset type of emoji animation can include a multi-person interactive emoji animation based on the virtual character. Specifically, the multi-person interactive emoji animation means that both parties who use an emoji animation to conduct a chat need to have their own virtual characters. Specifically, the multi-person interactive emoji animation can present an action animation or an emoji animation designed for at least two virtual characters. On the premise that both parties in the chat have virtual characters, the second user can send the multi-person interactive emoji animation to the first user, which further enriches the virtual character-based interactive functions.

In one optional implementation, in response to an application trigger operation for a preset type of emoji animation on a chat page, it is firstly determined whether the chat user has a virtual character, and if not, a preset interaction entry for the virtual character is displayed on the chat page, and then in response to a trigger operation for the preset interaction entry for the virtual character, the chat page jumps to a character generation page, and the virtual character is created based on the character generation page.

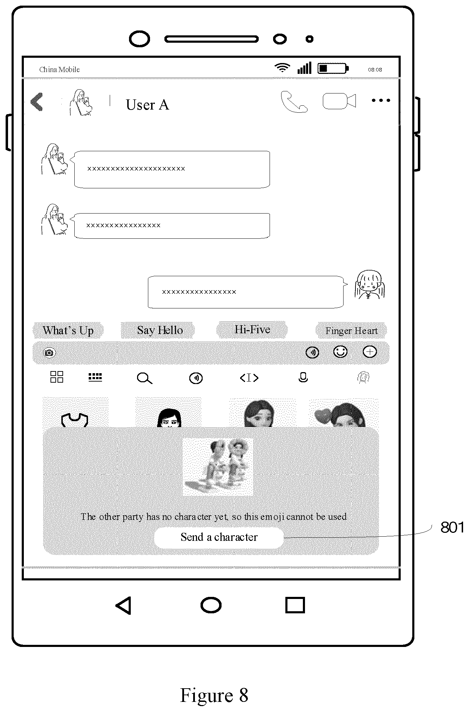

As shown in Fig. 5, assuming that the current user needs to send a multi-person interactive emoji animation to chat user A who has no virtual character however, when the current user triggers a click operation for a preset type of emoji animation 502 on the chat page, a preset interaction entry for the virtual character is displayed on the chat page. As shown in Fig. 8, it is a schematic diagram of yet another chat page provided by an embodiment of the present disclosure, wherein a preset interaction entry 801 of the virtual character is displayed on the panel of the chat page, and the preset interaction entry 801 is clicked to jump to the character generation page as shown in Fig. 3.

In practical application, after the first virtual character is presented on the chat page based on the first message card, the second user can also adjust the sent first virtual character so as to make the first virtual character more in line with the actual requirements.

In the embodiment of the present disclosure, firstly, in response to a trigger operation for a first virtual character on a chat page, the chat page jumps to a character generation page, and the first virtual character is displayed on the character generation page; then, an adjustment operation for the first virtual character on the character generation page is received to generate an updated virtual character.

In the embodiment of the present disclosure, the trigger operation for the first virtual character on the chat page can include a click operation acting on a message card corresponding to the first virtual character, and etc., which is used for realizing the function of jumping from the chat page to the character generation page.

As shown in Fig. 7, when a click operation acting on a message card 701 of a chat page is received, the chat page shown in Fig. 7 jumps to the character generation page shown in Fig. 3. A first virtual character is displayed on the character generation page, and an adjustment operation for the first virtual character is received to generate an updated virtual character.

In the embodiment of the present disclosure, after the updated virtual character is generated on the character generation page, it is also possible to trigger the sending of the updated virtual character to the first user in response to a preset trigger operation for the updated virtual character.

In the embodiment of the present disclosure, the updated virtual digital character is used for generating a target virtual character associated with the first user, which means that after the updated virtual character is sent to the first user, if the first user receives the updated virtual character, it is possible to use the updated virtual digital character as the target virtual character associated with the first user, and then generate a target media resource based on the target virtual character.

In the embodiment of the present disclosure, the preset trigger operation for the updated virtual character can include a sending operation for the updated virtual character, and etc. The specific sending operation can be understood with reference to the sending operation for the first virtual character, and will not be repeated here.

In the embodiment of the present disclosure, in response to the preset trigger operation for the updated virtual character, it is also possible to present the updated virtual character on the chat page based on the second message card, which is convenient for the first user to select the virtual character required by himself/herself according to requirements after receiving the first virtual character and the updated virtual character on the chat page, and then generate a corresponding target media resource.

In one optional implementation, it is also possible to present the first virtual character on the corresponding page by means of a notification message or an e-mail, and trigger the displaying of the first virtual character on the character generation page through a trigger operation for the sent message corresponding to the first virtual character; then, receive an adjustment operation for the first virtual character on the character generation page to generate an updated virtual character, and present the updated virtual character on the corresponding page again by means of a notification message or an e-mail.

In the embodiment of the present disclosure, if it is determined that the target virtual character associated with the first user is generated, that is, the first user has received the above-mentioned first virtual character or updated virtual character, a chat can be conducted on the chat page based on the preset type of emoji animation, which further enriches the virtual character-based interactive functions.

The preset type of emoji animation can include the target virtual character and the virtual character corresponding to the second user. Specifically, the preset type of emoji animation can present an action animation or an emoji animation designed for the target virtual character and the virtual character corresponding to the second user.

In one optional implementation, after the second user completes the creation of the first virtual character on the character generation page and sends the first virtual character or the updated virtual character to the first user, if the preset type of emoji animation is used to communicate with the first user again, assuming that it is determined that the target virtual character associated with the first user has not been generated, that is, the first user has not received the above-mentioned first virtual character or updated virtual character, it is possible to display the words "The other party can use emojis for two people after accepting the character" on the emoji panel of the second user, which is used for prompting that the other party of the second user has not received the virtual character.

It can be seen that the embodiment of the present disclosure can jump from the chat page to the character generation page in response to the trigger operation for the first virtual character on the chat page, and then adjust the first virtual character based on the character generation page to obtain the updated virtual character, which further enriches the virtual character-based interactive functions and improves the interactive experience of users for the virtual character.

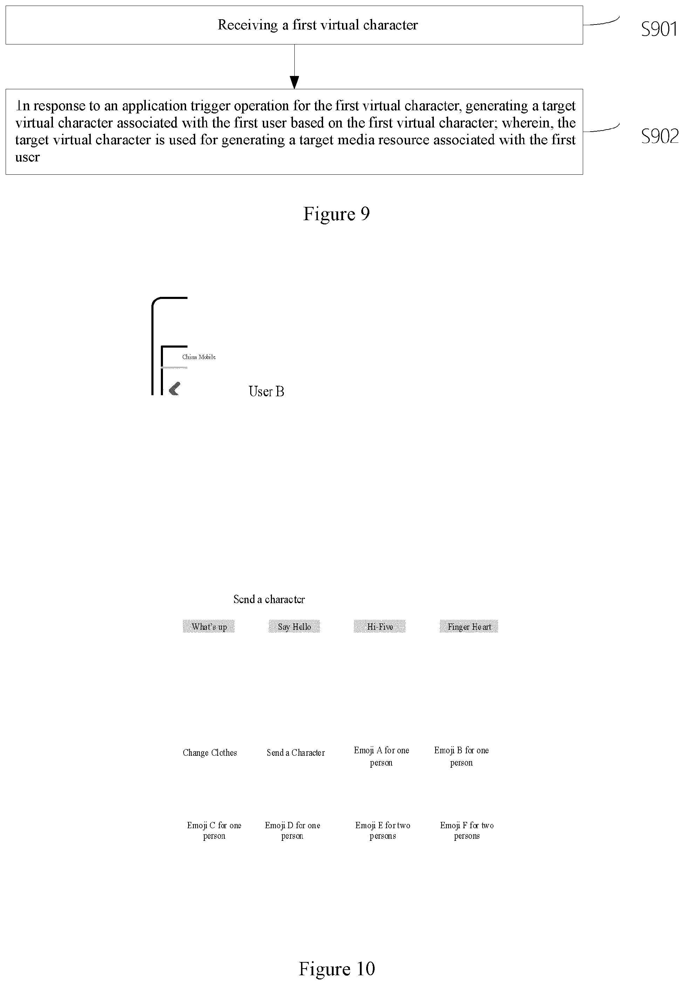

Based on the contents in the above-mentioned embodiments, the embodiment of the present disclosure provides a virtual character-based interaction method, which is applied to the first user side. As shown in Fig. 9, it is a flow diagram of another virtual character-based interaction method provided by an embodiment of the present disclosure, which includes:
S901: receiving a first virtual character.

In one optional implementation, a first virtual character is received on a chat page based on a first card message. As shown in Fig. 10, it is a schematic diagram of yet another chat page provided by an embodiment of the present disclosure. On a chat page of the first user (character receiver), the first virtual character is received in the form of a card message 1001.

In another optional implementation, it is also possible to receive the first virtual character by means of a notification message, for example, it is possible to present presented pictures, text information and etc. corresponding to the received first virtual character on a notification message reception page. The specific implementation of receiving the first virtual character by means of the notification message is not limited in the embodiment of the present application.

S902: in response to an application trigger operation for the first virtual character, generating a target virtual character associated with the first user based on the first virtual character; wherein, the target virtual character is used for generating a target media resource associated with the first user.

In the embodiment of the present disclosure, the application trigger operation for the first virtual character can include the trigger operation for the message card corresponding to the first virtual character on the chat page, and etc., wherein the trigger operation can include the click operation acting on the presented picture of the message card, and can also include the click operation acting on the text information of the message card, and etc., which is used for generating the target virtual character associated with the first user based on the first virtual character.

In the embodiment of the present disclosure, the target virtual character is used for generating the target media resource associated with the first user, which means that the target media resource is generated based on the target virtual character. The target media resource can include at least one of an emoji pack, a user profile picture, and a media content corresponding to the first virtual character. Because the emoji pack, user profile picture and media content can instantly present the display effect of the first virtual character, the playability and fun of the virtual character can be further improved by generating the emoji pack, user profile picture and media content corresponding to the first virtual character. The media content can include videos, images and other types of content generated based on the first virtual character.

In practical application, after receiving the first virtual character on the chat page, it is possible to generate the target virtual character associated with the first user based on the first virtual character, and it is also possible to modify and update the first virtual character so as to obtain the first virtual character that is more in line with personal requirements, which is convenient for subsequent generation of the target media resource.

Therefore, before the target virtual character associated with the first user is generated based on the first virtual character, the embodiment of the present disclosure can also display the preset interactive function page corresponding to the first virtual digital character in response to the trigger operation for the first virtual character. Specifically, when a trigger operation acting on a message card corresponding to the first virtual character on a chat page is received, a preset interactive function page corresponding to the first virtual digital character is displayed, and a target virtual character associated with the first user is generated on the preset interactive function page based on the first virtual character.

In the embodiment of the present disclosure, the target virtual character associated with the first user is generated based on the first virtual character on the preset interactive function page, which means that the presented picture corresponding to the first virtual character being displayed on the preset interactive function page is determined as the target virtual character associated with the first user.

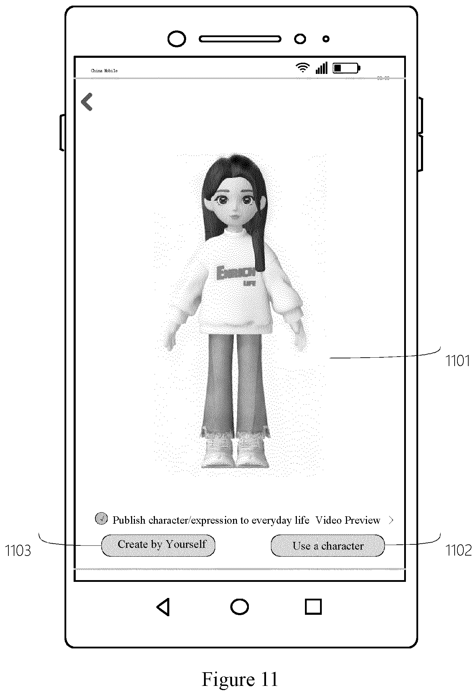

As shown in Fig. 10, when a click operation acting on a message card 1001 corresponding to the first virtual character is received, the chat page shown in Fig. 10 jumps to the preset interactive function page corresponding to the first virtual character, and the preset interactive function page is displayed. As shown in Fig. 11, it is a schematic diagram of a preset interactive function page provided by an embodiment of the present disclosure, wherein a presented picture 1101 of the first virtual character is displayed on the preset interactive function page.

Specifically, the presented picture 1101 of the first virtual character can be determined as the target virtual character associated with the first user. Alternatively, the first user can further adjust the first virtual character to obtain the required target virtual character. In one optional implementation, after generating the target virtual character associated with the first user based on the first virtual character on the preset interactive function page, it is also possible to realize the function of generating the emoji animation associated with the first user based on the target virtual character through an application trigger operation for the target virtual character on the preset interactive function page.

The emoji animation associated with the first user is applied to conduct a chat on the chat page, which means that the first user can use the emoji pack presented on the chat page to perform interaction and communication with other users, which thus enriches the virtual character-based interactive functions and improves the interactive experience of users for the virtual character.

In the embodiment of the present disclosure, the application trigger operation for the target virtual character on the preset interactive function page can include a click operation acting on an application control of the preset interactive function page, and etc., which is used for realizing the effect of generating an emoji animation associated with the first user based on the target virtual character.

As shown in Fig. 11, an application control 1102 is set on the preset interactive function page. When a click operation acting on the application control 1102 is received, as shown in Fig. 10, an emoji animation associated with the first user is generated on an emoji panel 1002 of the chat page based on the target virtual character. When receiving a click operation acting on an emoji animation 1003, it is possible to send the emoji animation 1003 to the second user B, so as to realize the effect of using the virtual character to perform interaction and communication with other users, which further improves the fluidity and playability of the virtual character between users, thus improving the user experience.

In one optional implementation, after receiving the first virtual character, assuming that the first user wants to adjust the first virtual character, it is possible to display the first virtual character on the character generation page through an update trigger operation for the first virtual character, and then adjust the first virtual character based on the character generation page.

In the embodiment of the present disclosure, the update trigger operation for the first virtual character can include a click operation acting on the update control of the preset interactive function page corresponding to the first virtual character, which is used for realizing the effect of jumping from the preset interactive function page to the character generation page.

As shown in Fig. 11, an update control 1103 is provided on the preset interactive function page. When a click operation acting on the update control 1103 is received, the preset function page jumps to the character generation page shown in Fig. 3, and the first user can further adjust the first virtual character on the character generation page so as to obtain the required target virtual character.

In the embodiment of the present disclosure, an adjustment operation for the first virtual character on the character generation page is received to generate an updated first virtual character, which facilitates the subsequent generation of the target virtual character associated with the first user based on the updated first virtual character, which thus improves the virtual character-based interactive experience of the first user.

In the virtual character-based interaction method provided by the embodiment of the present disclosure, firstly, a first user receives a first virtual character, and then generates a target virtual character associated with the first user based on the first virtual character in response to an application trigger operation for the first virtual character. It can be seen that in the embodiment of the present disclosure, the first user generates the target virtual character associated with the first user based on the received first virtual character, and then generates the target media resource associated with the first user based on the target virtual character, which thus further enriches the virtual character-based interactive functions and improves the interactive experience of users for the virtual character.

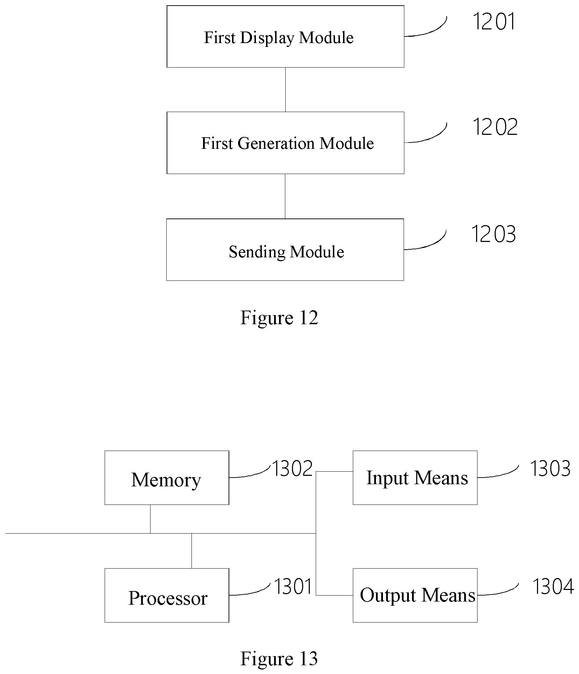

Based on the above-mentioned method embodiment, the present disclosure also provides a virtual character-based interaction apparatus. Referring to Fig. 12, it is a schematic structural diagram of a virtual character-based interaction apparatus provided by an embodiment of the present disclosure, which includes:
a first display module 1201 for displaying a character generation page in response to a trigger operation for a preset interaction entry of a virtual character; wherein the target page is an associated page of a first user;
a first generation module 1202 for generating a first virtual character based on a virtual character creation operation acting on the character generation page;
a sending module 1203 for triggering sending of the first virtual character to the first user in response to a preset interaction trigger operation for the first virtual character; wherein, the first virtual character is used for generating a target virtual character associated with the first user for the target user.

In one optional implementation, the first display module comprises:
a first jump submodule for jumping from the chat page to the character generation page and displaying the character generation page in response to a trigger operation for a preset interaction entry of a virtual character on a chat page; wherein the chat page is used for displaying a chat with participation of the first user and the second user.

In one optional implementation, the sending module includes:
a first presentation submodule for presenting the first virtual character on the chat page based on a first message card in response to a preset interaction trigger operation for the first virtual character.

In one optional implementation, the sending module includes:
a second jump submodule for jumping from the chat page to the character generation page and displaying the first virtual character on the character generation page in response to a trigger operation for the first virtual character on the chat page;
a first generation submodule for receiving an adjustment operation for the first virtual character on the character generation page to generate an updated virtual character.

In one optional implementation, the sending module further includes:
a sending submodule for triggering sending of the updated virtual character to the first user in response to a preset interaction trigger operation for the updated virtual character; wherein, the updated virtual character is used for generating a target virtual character associated with the first user.

In one optional implementation, the sending module further includes:
a second presentation submodule for presenting the updated virtual character on the chat page based on a second message card in response to a preset interaction trigger operation for the updated virtual character.

In one optional implementation, the first display module further includes:
a first display submodule for displaying a preset interaction entry for a virtual character on the chat page in response to an application trigger operation for a preset type of emoji animation on the chat page; wherein, the preset type of emoji animation is a virtual character-based interactive emoji animation.

In one optional implementation, the first display module further includes:
a chat submodule for conducting a chat on the chat page based on the preset type of emoji animation after determining that the target virtual character associated with the first user is generated; wherein, the preset type of emoji animation comprises the target virtual character and a virtual character corresponding to the second user.

In one optional implementation, the apparatus further includes:
a reception module for receiving a first virtual character;
a second generation module for generating a target virtual character associated with the first user based on the first virtual character in response to an application trigger operation for the first virtual character; wherein, the target virtual character is used for generating a target media resource associated with the first user.

In one optional implementation, the reception module further includes:
a reception submodule for receiving the first virtual character on a chat page based on a message card.

In one optional implementation, the second generation module further includes:
a second display submodule for generating a target virtual character associated with the first user based on the first virtual character in response to a trigger operation for the first message card on the chat page.

In one optional implementation, the second generation module further includes:
a second generation submodule for generating an emoji animation associated with the first user based on the target virtual character in response to an application trigger operation for the target virtual character; wherein, the emoji animation associated with the first user is applied to conduct a chat on the chat page.

In one optional implementation, the reception module further includes:
a third display submodule for displaying the first virtual character on the character generation page in response to an update trigger operation for the first virtual character;
a third generation submodule for receiving an adjustment operation for the first virtual character on the character generation page to generate an updated first virtual character; wherein, the updated first virtual character is used for generating a target virtual character associated with the first user.

In one optional implementation, the target media resource includes at least one of: an emoji pack, a user profile picture, and a media content corresponding to the target virtual character.

The virtual character-based interaction apparatus provided by the embodiment of the present disclosure comprises: displaying a character generation page in response to a trigger operation for a preset interaction entry in a target page; generating a first virtual character based on a virtual character creation operation acting on the character generation page; then, triggering sending of the first virtual character to the first user in response to a preset interaction trigger operation for the first virtual character. It can be seen that the embodiment of the present disclosure can realize the interactive functions of creating the first virtual character and sending it to the first user, which enriches the virtual character-based interactive functions and further improves the interactive experience of users for the virtual character.

In addition to the-mentioned above method and apparatus, an embodiment of the present disclosure also provides a computer readable storage medium storing therein instructions which, when operated on a terminal device, cause the terminal device to implement the virtual character-based interaction method according to the embodiment of the present disclosure.

An embodiment of the present disclosure also provides a computer program product comprising computer programs/instructions which, when executed by a processor, implement the virtual character-based interaction method according to the embodiment of the present disclosure.

In addition, an embodiment of the present disclosure also provides a virtual character-based interaction device, as shown in Fig. 13, which can include:
a processor 1301, a memory 1302, an input means 1303 and an output means 1304. The processor 1301 in the virtual character-based interaction device can include one or more processors, and one processor is taken as an example in Fig. 13. In some embodiments of the present disclosure, the processor 1301, the memory 1302, the input means 1303 and the output means 1304 can be connected by a bus or other means, wherein, the connection by a bus is taken as an example in Fig. 13.

The memory 1302 can be used for storing software programs and modules, and the processor 1301 executes various functional applications and data processing of the virtual character-based interaction device by running the software programs and modules stored in the memory 1302. The memory 1302 can mainly include a program storage area and a data storage area, wherein the program storage area can store an operating system, application programs required by at least one function, and etc. In addition, the memory 1302 can include a high-speed random access memory, and can also include a non-volatile memory, such as at least one disk memory device, flash memory device, or other volatile solid-state memory devices. The input means 1303 can be used for receiving input digital or character information and generating a signal input related to user settings and function control of the virtual character-based interaction device.

Specifically, in the present embodiment, the processor 1301 will load executable files corresponding to the processes of one or more application programs into the memory 1302 according to the following instructions, and the processor 1301 will run the application programs stored in the memory 1302, thus realizing various functions of the above-mentioned virtual character-based interaction device.

Compared with related technologies, the technical solution provided by the embodiment of the present disclosure has at least the following advantages.

The embodiment of the present disclosure provides a virtual character-based interaction method, comprising: on a second user side, firstly, displaying a character generation page in response to a trigger operation for a preset interaction entry in a target page; generating a first virtual character based on a virtual character creation operation acting on the character generation page; then, triggering sending of the first virtual character to the first user in response to a preset interaction trigger operation for the first virtual character. It can be seen that the embodiment of the present disclosure can realize the interactive functions of creating the target virtual character and sending it to the first user, which enriches the virtual character-based interactive functions and further improves the interactive experience of users for the virtual character.

It should be noted that, relational terms such as "first" and "second" herein are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed, or elements inherent to such process, method, article or device. Without further restrictions, an element defined by the phrase "including one ..." does not exclude the existence of other identical elements in the process, method, article or device including the element.

What has been described above is only the specific implementations of the present disclosure, so that those skilled in the art can understand or implement the present disclosure. Many modifications to these embodiments will be obvious to those skilled in the art, and the general principles defined herein can be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A virtual character-based interaction method, which comprises, on a second user side:
displaying a character generation page in response to a trigger operation for a preset interaction entry in a target page; wherein, the target page is an associated page of a first user;
generating a first virtual character based on a virtual character creation operation acting on the character generation page;
triggering sending of the first virtual character to the first user in response to a preset interaction trigger operation for the first virtual character; wherein, the first virtual character is configured for generating a target virtual character associated with the first user.

2. The method according to Claim 1, wherein the displaying the character generation page in response to the trigger operation for the preset interaction entry in a target page comprises:
jumping from a chat page to the character generation page and displaying the character generation page in response to the trigger operation for the preset interaction entry on the chat page; wherein the chat page is configured for displaying a chat with participation of the first user and the second user.

3. The method according to Claim 2, wherein the triggering sending of the first virtual character to the first user in response to the preset interaction trigger operation for the first virtual character comprises:
presenting the first virtual character on the chat page based on a first message card in response to a preset interaction trigger operation for the first virtual character.

4. The method according to Claim 2 or 3, wherein, after the triggering sending of the first virtual character to the first user in response to the preset interaction trigger operation for the first virtual character, the method further comprises:
jumping from the chat page to the character generation page and displaying the first virtual character on the character generation page in response to the trigger operation for the first virtual character on the chat page;
receiving an adjustment operation for the first virtual character on the character generation page to generate an updated virtual character.

5. The method according to Claim 4, wherein, after the receiving an adjustment operation for the first virtual character on the character generation page to generate the updated virtual character, the method further comprises:
triggering sending of the updated virtual character to the first user in response to a preset interaction trigger operation for the updated virtual character; wherein, the updated virtual character is configured for generating a target virtual character associated with the first user.

6. The method according to Claim 5, wherein the triggering sending of the updated virtual character to the first user in response to the preset interaction trigger operation for the updated virtual character comprises:
presenting the updated virtual character on the chat page based on a second message card in response to the preset interaction trigger operation for the updated virtual character.

7. The method according to Claim 2, wherein, before the jumping from the chat page to the character generation page and displaying the character generation page in response to the trigger operation for the preset interaction entry on the chat page, the method further comprises:
displaying the preset interaction entry for the virtual character on the chat page in response to an application trigger operation for a preset type of emoji animation on the chat page; wherein, the preset type of emoji animation is a virtual character-based interactive emoji animation.

8. The method according to Claim 7, wherein, after the displaying the preset interaction entry for the virtual character on the chat page in response to the application trigger operation for the preset type of emoji animation on the chat page, the method further comprises:
after determining that the target virtual character associated with the first user is generated, conducting a chat on the chat page based on the preset type of emoji animation; wherein, the preset type of emoji animation comprises the target virtual character and a virtual character corresponding to the second user.

9. A virtual character-based interaction method, which comprises, on a first user side:
receiving a first virtual character;
generating a target virtual character associated with the first user based on the first virtual character in response to an application trigger operation for the first virtual character; wherein, the target virtual character is configured for generating a target media resource associated with the first user.

10. The method according to Claim 9, wherein the receiving the first virtual character comprises:
receiving the first virtual character on a chat page based on a first message card.

11. The method according to Claim 10, wherein the generating the target virtual character associated with the first user based on the first virtual character in response to the application trigger operation for the first virtual character comprises:
generating a target virtual character associated with the first user based on the first virtual character in response to a trigger operation for the first message card on the chat page.

12. The method according to any one of Claims 9 to 11, wherein, after the generating the target virtual character associated with the first user based on the first virtual character in response to the application trigger operation for the first virtual character, the method further comprises:
generating an emoji animation associated with the first user based on the target virtual character in response to the application trigger operation for the target virtual character; wherein, the emoji animation associated with the first user is configured for application to conduct a chat on the chat page.

13. The method according to Claim 9, wherein, after the receiving the first virtual character, the method further comprises:
displaying the first virtual character on the character generation page in response to an update trigger operation for the first virtual character;
receiving an adjustment operation for the first virtual character on the character generation page to generate an updated first virtual character; wherein, the updated first virtual character is configured for generating a target virtual character associated with the first user.

14. The method according to Claim 9, wherein the target media resource comprises at least one of: an emoji pack, a user profile picture, and a media content corresponding to the target virtual character.

15. A virtual character-based interaction apparatus, which comprises:
a first display module for displaying a character generation page in response to a trigger operation for a preset interaction entry in a target page; wherein, the target page is an associated page of a first user;
a first generation module for generating a first virtual character based on a virtual character creation operation acting on the character generation page;
a sending module for triggering sending of the first virtual character to the first user in response to a preset interaction trigger operation for the first virtual character; wherein, the first virtual character is configured for generating a target virtual character associated with the first user.

16. A virtual character-based interaction apparatus, which comprises:
a reception module for receiving a first virtual character;
a second generation module for generating a target virtual character associated with the first user based on the first virtual character in response to an application trigger operation for the first virtual character; wherein, the target virtual character is configured for generating a target media resource associated with the first user.

17. A computer readable storage medium storing therein instructions which, when operated on a terminal device, cause the terminal device to implement the method according to any one of Claims 1 to 8.

18. A virtual character-based interaction device, comprising: a memory, a processor, and a computer program which is stored on the memory and operational on the processor, wherein the processor, when executing the computer program, implements the method according to any one of Claims 1 to 8.

19. A computer readable storage medium storing therein instructions which, when operated on a terminal device, cause the terminal device to implement the method according to any one of Claims 9 to 14.

20. A virtual character-based interaction device, comprising: a memory, a processor, and a computer program which is stored on the memory and operational on the processor, wherein the processor, when executing the computer program, implements the method according to any one of Claims 9 to 14.
